# EUROPEAN PATENT APPLICATION

(11) **EP 4 657 264 A1**
(43) Date of publication of application: **03.12.2025**
(21) Application number: 24179294.4
(22) Date of filing: 31.05.2024
(51) Int. Cl.: G06F 11/36

(54) **ASSEMBLY AND METHOD FOR ANALYZING A SYSTEM**

(71) Applicant: Aptiv Technologies AG, 8200 Schaffhausen (CH)
(72) Inventor: Beier, Ralf Anton, 2939 Schaffhausen (CH); Petig, Christof, 2939 Schaffhausen (CH)
(74) Representative: Manitz Finsterwald Patent- und Rechtsanwaltspartnerschaft mbB

(57) **Abstract**

An assembly for analyzing a system including a first entity, configured to send and receive data, a second entity, configured to send and receive data, at least one third entity, configured to receive the data from the first entity and/or the data of the second entity; and an interface, configured to transmit the data of the first entity to the second entity and to the third entity and/or to transmit the data of the second entity to the first entity and to the third entity, wherein the interface is of a Web assembly Interface Type, WIT, or a Web assembly Interface Type definition file, and wherein data from an egress of the third entity is used for analyzing the system.

## Description

### FIELD

The present disclosure relates to an assembly and a method for analyzing a system.

### BACKGROUND

In order to test applications or systems in an automotive environment, for example in a vehicle, in real-world scenarios, vehicle manufacturers and responsible suppliers are conducting test drives on real roads to evaluate the performance.

In these test drives, the application or system under test has to be clearly separated from the rest of the environment. Common solutions as of now are to add dedicated hardware into the system, wherein a specific communication interface is required to transfer data from the environment to the dedicated hardware.

Thus, extra hardware is necessary and a vehicle level concept for distributing the input data for the application or system under test needs to be developed and deployed. This may lead to an additional increase, for example, in switch hardware and performance. Further, all input data for the application or system under test have to be part of the official vehicle communication.

Accordingly, there is a need for an assembly and a method for analyzing a system without the need for additional hardware components or an additional communication interface.

### SUMMARY

The present disclosure provides an assembly for analyzing a system, a method for analyzing a system and a vehicle according to the independent claims. Embodiments are given in the subclaims, the description and the drawings.

In one aspect, the present disclosure is directed at an assembly for analyzing a system. The assembly comprises a first entity configured to send and receive data; a second entity configured to send and receive data; at least one third entity configured to receive the data from the first entity and/or the data from the second entity; and an interface configured to transmit the data of the first entity to the second entity and to the third entity and/or to transmit the data of the second entity to the first entity and to the third entity, wherein the interface is defined by a Web assembly Interface Type (WIT) or a Web assembly Interface Type definition file, and wherein data from an egress of the third entity is used for analyzing the system.

In other words, the interface may be configured to receive data from an egress of the first entity and transmit the data of the first entity to at least one of an ingress of the second entity or an ingress of the third entity. The interface may be configured to receive data from an egress of the second entity and transmit the data from the egress of the second entity to at least one of an ingress of the first entity or an ingress of the third entity. The interface may also be configured to receive data from at least one of an egress of the first entity or an egress of the second entity and transmit the received data from the first entity and/or the second entity to a non-blocking queue. The non-blocking queue may be a memory including sufficient storage size such that the transmitted data of the interface may always be stored. This may ensure a data flow of the respective data from the interface.

The first entity may be hardware or software, in particular, the first entity may be an application. The application may be an application for autonomous driving or an application for advanced driver assistance systems in a vehicle.

The second entity may also be hardware or software, in particular, the second entity may be a sensor, for example a radar sensor, a Lidar sensor or a camera. The data transmitted from the second entity to the first and/or third may comprise data acquired by the sensor. It is to be understood that the second entity may also be an application, in particular, the second entity may be the same application as the first entity. Thus, the interface may split between parts of the one application.

The at least one third entity may be one of hardware, software or a non-blocking queue. In particular, the third entity may be a shadow application, wherein the shadow application may be a new application or an updated version of an existing application, for example, an updated version of the application of the first entity. The third entity may include an application under test in a real-world scenario. The non-blocking queue may be a memory configured to store data.

Data as described herein may be sensor data or internal system data. The data may be sent and received by means of the interface so that the same data or a copy of the data may be available at the first entity, the second entity and the third entity, in particular at the same time. Exemplary data may be radar target data, ego motion data, for example speed and rotation rates, GPS location data, map data or intended car acceleration or steering data.

The Web assembly Interface Type (WIT), also abbreviated as *Wasm,* may define a portable binary-code format and a corresponding text format for the interfaces to facilitate interactions between entities as described herein.

The data from an egress of the third entity may be used for analyzing the system or for testing an application, wherein analyzing the system may include triggering a shadow mode application, performing dedicated analyzing, logging data or some other means. It is to be understood that analyzing the system may also be based on the data of the first entity or the data of the second entity that are transmitted to the third entity using the interface. In particular, if the third entity is a non-blocking queue, the data of the first entity and the data of the second entity may be used to analyze the system or to test an application. Further, analyzing may be based on at least one of the transmitted data of the first entity or the transmitted data of the second entity and the data from the egress of the third entity.

An analysis of the system may include a data analysis in relation to errors that may occur during the testing of the system. In particular, the analysis of the system may include at least one of: critical event monitoring, recording mode, intrusion detection, shadow mode application and/or redundancy.

The assembly may comprise a plurality of computer hardware components (for example a processor, for example processing unit or processing network, at least one memory, for example memory unit or memory network, and at least one non-transitory data storage). It will be understood that the same or further computer hardware components may be provided and used for carrying out steps of the method disclosed below.

According to an embodiment, the interface is configured to filter the data of the first entity and/or to filter the data of the second entity. Filtering may include selecting certain data from the data of the first entity or from the data of the second entity. The filtered or selected data may depend on the test applied to the system. The data may be filtered before the data is transmitted to the third entity using the interface. Thus, only data that is relevant to the current test may be transmitted to the third entity by means of the interface.

According to an embodiment, the interface is configured to transform the data of the first entity and/or to transform the data of the second entity. Transforming may include converting, manipulating, changing, deleting, or adjusting the data of the first entity or the data of the second entity. How the data is transformed may depend on the test applied to the system under test or the test applied to an application under test. The data may be transformed before the data is transmitted to the third entity using the interface.

According to an embodiment, the interface comprises a first channel and a second channel, wherein the first channel and the second channel are defined by a Web assembly Interface Type (WIT) or a Web assembly Interface Type definition file. The WIT language may define the content and direction of the first channel and the second channel.

According to an embodiment, the first channel is configured to receive the data from the first entity and transmit the data of the first entity to the second entity, wherein the first channel is further configured to transmit the data of the first entity to the third entity. The first channel may be configured to filter the received data from the first entity. Alternatively or additionally, the first channel may be configured to transform the received data from the first entity. Further, the first channel may be configured to transmit the received data from the first entity, or the filtered data of the first entity, or the transformed data of the first entity to the third entity. Thus, the first channel may be used to distribute data from the first entity to the second entity and to the third entity.

According to an embodiment, the second channel is configured to receive the data of the second entity and transmit the data of the second entity to the first entity, wherein the second channel is further configured to transmit the data of the second entity to the third entity. The second channel may be configured to filter the received data from the second entity. Alternatively or additionally, the second channel may be configured to transform the received data from the second entity. Further, the second channel may be configured to transmit the received data from the second entity, or the filtered data of the second entity, or the transformed data of the second entity to the third entity. Thus, the second channel may be used to distribute data from the second entity to the first entity and the third entity.

According to an embodiment, the interface is configured to be operable independently of an operation system of the assembly. The first entity and the second entity may operate with different operation systems and/or with different processors. The operation system may be one of Linux, vxWorks, QNX, freeRTOS, Zephyr or MICROSAR. The interface may support any language on any operating system.

According to an embodiment, the first entity and the second entity are configured to communicate solely via the interface. Therefore, the first entity and the second entity may be completely decoupled. A data transfer between the first entity and the second entity may only be performed via the interface. The first entity and the second entity may send the respective data only to the interface and the interface may transmit the received data to at least one other entity or one other interface of the assembly.

The first entity and the second entity may be configured to communicate solely via the first channel and/or the second channel. Therefore, the first entity and the second entity may be completely decoupled. A data transfer between the first entity and the second entity may only be performed via the first channel and/or the second channel. The first entity and the second entity may send the respective data only to the first channel and/or the second channel and the first channel and/or the second channel may transmit the received data to at least one other entity or one other channel of the assembly.

According to an embodiment, the assembly further comprises a further interface, wherein the further interface is defined by a Web assembly Interface Type (WIT) or a Web assembly Interface Type definition file, wherein the further interface is configured to receive data from the interface and transmit the data from the interface to the third entity. Therefore, data may be transmitted from the first entity and/or the second entity to the third entity via the interface and the further interface. It is to be understood that the further interface may be configured as the interface. In particular, the further interface may include at least two channels, wherein each of the at least two channels may be defined by a Web assembly Interface Type (WIT) and each of the at least two channels may be configured to send and receive data from other entities or other interfaces of the assembly. It is to be understood that each interface or each channel as described herein may be configured to filter and/or transform data.

According to an embodiment, the assembly further comprises a fourth entity, configured to compare data of the first entity, data of the second entity, and/or data of the third entity, wherein the further interface is configured to receive data from the third entity and data from the interface and transmit the data of the third entity and the data of the interface to the fourth entity. The fourth entity may be a comparator or an analyzer. The fourth entity may be configured to compare data of at least two entities. It is to be understood that the fourth entity may be configured to compare data of the first entity and data of the second entity.

In another aspect, the present disclosure is directed at a method for analyzing a system. The method comprises: receiving data of a first entity by means of an interface, receiving data of a second entity by means of the interface, transmitting the data of the first entity and the data of the second entity to a third entity by means of the interface, and analyzing the system based on data from an egress of the third entity, wherein the interface is defined by a Web assembly Interface Type, WIT, or a Web assembly Interface Type definition file.

According to an embodiment, the method further comprises filtering the data of the first entity by means of the interface, and/or filtering the data of the second entity by means of the interface before transmitting the data of the first entity and the data of the second entity to the third entity.

According to an embodiment, the method further comprises transforming the data of the first entity by means of the interface, and/or transforming the data of the second entity by means of the interface before transmitting the data of the first entity and the data of the second entity to the third entity.

According to an embodiment, the method further comprises receiving data from the interface by means of a further interface, and transmitting the data from the interface to the third entity by means of the further interface.

According to an embodiment, the method further comprises receiving data from the third entity and data from the interface by means of the further interface, transmitting the data of the third entity and the data of the interface to a fourth entity by means of the further interface, and comparing the transmitted data of the third entity and the transmitted data of the interface by means of the fourth entity.

The method described herein can be a computer implemented method. In another aspect, the present disclosure is directed at a non-transitory computer readable medium comprising instructions which, when executed by a computer system, cause the computer system to carry out several or all steps or aspects of the (computer implemented) method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

In another aspect, the present disclosure is directed at vehicle, comprising the assembly as described herein.

### DRAWINGS

Exemplary embodiments and functions of the present disclosure are described herein in conjunction with the following drawings, showing schematically:
- Fig. 1: an assembly for analyzing a system according to an embodiment;
- Fig. 2: a further assembly for analyzing a system according to an embodiment;
- Fig. 3: a further assembly for analyzing a system according to an embodiment;
- Fig. 4: a further assembly for analyzing a system according to an embodiment;
- Fig. 5: a further assembly for analyzing a system according to an embodiment;
- Fig. 6: a further assembly for analyzing a system according to an embodiment; and
- Fig. 7: a flowchart of a method for analyzing a system.

### DETAILED DESCRIPTION

The present disclosure is related to a Web assembly interface type as means for efficient networking, observability, tracing and security. An improvement in testing applications or systems in a vehicle in real-world scenarios may be achieved by using an assembly and a method for analyzing a system as described herein.

Automobile manufacturer may have already started to introduce shadow mode testing of applications or systems in real-world scenarios. There, a pre-release version of software may be taken and monitored under real-world conditions to see how a potential piece of software is performing on the road. However, this may require a clear separation of the application under test from the rest of the environment including additional communication overhead, or Input/Output (I/O) requirements in general.

Therefore, common solutions as of now may need to add dedicated hardware into the system, for example a protected area blade. The protected area blade may be a piece of hardware in the vehicle. It may be located within a scalable compute platform (SCP) and may be located next to an Advanced Driver Assistance System (ADAS) blade, responsible for all ADAS functionalities or Autonomous Driving (AD) functionalities in the vehicle.

Because the protected area blade may be isolated from any interference from the rest of the system, highest safety standards may be achieved and, at the same time, the protected area may be used for development purposes.

The protected area may offer two main advantages for development: A pre-release version of software may be tested under real-world conditions to see how the pre-release software performs in practice. This process may be referred to as shadowing mode. Also, a computing power of the protected area blade may be leveraged to carry out intelligent data aggregation and collection. This process may be referred to as power mode.

However, problems arising out of this solution using a protected area blade may be that extra hardware is necessary and a vehicle level concept for distributing the input data for the application under test needs to be developed and deployed. This may lead to an additional increase, for example, in switch hardware and performance. Further, all input data for the application under test may have to be part of the official vehicle communication.

The methods and systems described herein may be configured in that the application or the system under test has communication input needs and only consumes computing cycles. The application or system under test may not use any external I/O like access to an external neural network accelerator. However, it is to be understood that these applications may still benefit from the proposed solution but still need to be executed on an external hardware. The same solution scope may be used and the external hardware may be limited to support these applications. This may reduce hardware costs.

Taking a regular operating system environment, it may be possible to encapsulate and limit computing resources from the application under test from the regular system. This may allow to reduce the actual demands to keep the freedom from interference by ensuring that the communications effort within the normal system does not change.

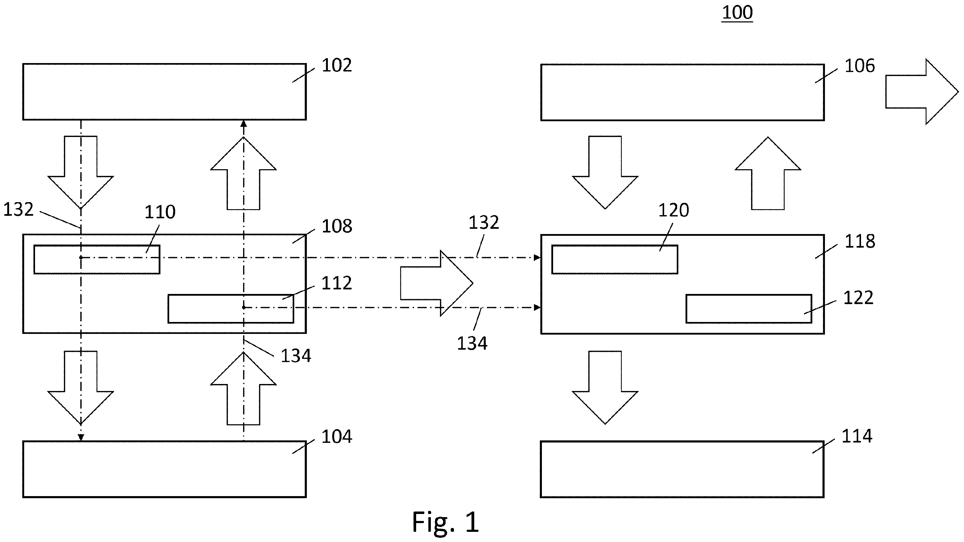

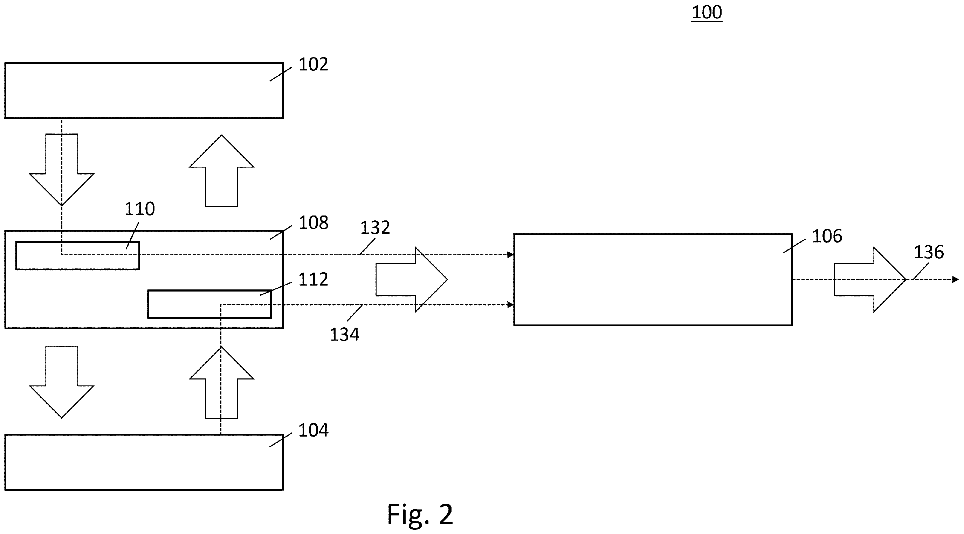

Fig. 1 shows an assembly 100 for analyzing a system according to an embodiment. The assembly 100 may include a first entity 102, a second entity 104 and an interface 108. The first entity 102 and the second entity 104 may be configured to send and receive data 132, 134, respectively. The interface 108 may be configured to transmit the data 132 of the first entity 102 to the second entity 104. The interface 108 may also be configured to transmit the data 134 of the second entity 104 to the first entity 102. The interface 108 may be of a Web assembly Interface Type, WIT, or a Web assembly Interface Type definition file. The first entity 102 and the second entity 104 may be configured to communicate, i.e. to send and receive data 132, 134, solely via the interface 108. These basic features may apply to all assemblies described in Figs. 2 to 5 further below, even if not shown explicitly in the figures.

The interface 108 may include a first channel 110 and a second channel 112, wherein the first channel 110 and the second channel 112 may be defined by a Web assembly Interface Type (WIT) or a Web assembly Interface Type definition file. The first channel 110 may be configured to receive the data 132 from the first entity 102 and transmit the data 132 of the first entity 102 to the second entity 104. The second channel 112 may be configured to receive the data 134 from the second entity 104 and transmit the data 134 of the second entity 104 to the first entity 102. Also, these basic features may apply to all assemblies described in Figs. 2 to 5 further below, even if not shown explicitly in the figures.

The assembly 100 may further include a third entity 106. The interface 108 may be configured to transmit either the data 132 from the first entity 102 to the third entity 106 or the data 134 from the second entity 104 to the third entity 106, or both, the data 132 from the first entity 102 and the data 134 from the second entity 104 to the third entity 106. Thus, the interface 108 may be configured to transmit the data 132 of the first entity 102 not only to the second entity 104, but also to the third entity 106. In particular, the first channel 110 of the interface 108 may be configured to transmit the data 132 of the first entity 102 not only to the second entity 104, but also to the third entity 106. The interface 108 may also be configured to transmit the data 134 of the second entity 104 not only to the first entity 102, but also to the third entity 106. In particular, the second channel 112 of the interface 108 may be configured to transmit the data 134 of the second entity 104 not only to the first entity 102, but also to the third entity 106. These features of the interface 108, in particular of the first channel 110 and the second channel 112, may apply to all assemblies described in Figs. 2 to 5 further below, even if not shown explicitly in the figures.

The interface 108 may be used to split between parts of an execution environment from an actual application. It is to be understood that the interface 108 may also be used to split between application components as well, for example, within an application. For example, the interface 108 may split between an application if the first entity 102 and the second entity 104 may include the same application. Therefore, internal data of an application may be transmitted to the third entity 106 by means of the interface 108.

The first channel 110 may further be configured to transmit the data 132 of the first entity 102 to the third entity 106. The second channel 112 may further be configured to transmit the data 134 of the second entity 104 to the third entity 106.

The assembly 100 may further include a further interface 118. The further interface 118 may also be of a Web assembly Interface Type, WIT, or a Web assembly Interface Type definition file. The further interface 118 may be configured to receive data 132, 134 from the interface 108 and transmit the data 132, 134 from the interface 108 to the third entity 106. The further interface 118 may include at least one further channel 120, 122, for example a third channel 120 and a fourth channel 122. The at least one further channel 120, 122 may be defined by a Web assembly Interface Type (WIT) or by a Web assembly Interface Type definition file, wherein the at least one further channel 120, 122 may be configured to receive the data 132, 134 from the interface 108 and transmit the data 132, 134 received from the interface 108 to the third entity 106.

The interface 108 may be configured to send data 132, 134 to the further interface 118. In particular, the interface 108 may be configured to send data 132 from the first entity 102 to the further interface 118 and/or the interface 108 may be configured to send data 134 from the second entity 104 to the further interface 118. The interface 108 may not receive data from the further interface 118. On the other hand, the further interface 118 may not transmit or send data to the interface 108. A communication or a data transfer may only be from the interface 108 to the further interface 118. Data from an actual application, for example an application of the first entity 108 may only be sent to and not received from an application under test, for example an application of the third entity 106. Thus, a test environment including at least the third entity 106 may be separated from the rest of the system. This allows the system to be analyzed or an application to be tested while the system is in operation. It is to be understood that instead of the interface 108, the first channel 110 and/or the second channel 112 may be configured to send data 132, 134 to the further interface 118 or to the third channel 120 and/or the fourth channel 122 of the further interface 118.

The third entity 106 may be configured to receive the data 132 from the first entity 102 directly by means of the interface 108 or the first channel 110. The third entity 106 may also be configured to receive the data 134 from the second entity 104 directly by means of the interface 108 or the second channel 112. Therefore, the further interface 118 may not be required. The data from an egress of the third entity 106 may be used for analyzing the system or for testing an application.

The default mode on the first channel 110, the second channel 112, or the at least one other channel 120, 122 may be a shared nothing concept. This means that any communication via the channel 110, 112, 120, 122 may need to be accompanied with a code taking care of copying, moving, or sharing it from one side to the other of the respective channel 110, 112, 120, 122. Communication in this sense may mean receiving and sending data from one entity to another.

The code, in other words a communication engine, may be responsible to provide the data from one part of the application to another part of the application. This may be a default behavior of the first channel 110, the second channel 112, or the at least one other channel 120, 122. In addition, the first channel 110, the second channel 112, or the at least one other channel 120, 122 may be extended to also provide the data to a non-blocking queue. Since the application may always provide this communication to a non-blocking queue, no additional communication means, for example a specific communication interface is necessary, regardless of whether a shadow application, for example within the third entity 106, is running or not.

The interface 108 may additionally be configured to decide which data to transmit. Therefore, the interface 108 may be configured to filter the data 132 of the first entity 102 and/or to filter the data 134 of the second entity 104. The interface 108 may then transmit the filtered data of the first entity 102 to the second entity 104 and to the third entity 106. Alternatively or additionally, the interface 108 may transmit the filtered data of the second entity 104 to the first entity 102 and to the third entity 106. Filtering may mean to select specific data of the data from the first entity 102 and/or the data of the second entity 104. For example, a security switch may be implemented to filter the data, e.g. the security switch may be configured to filter reliable data. For example, the security switch may filter commands which accelerate a vehicle while a user of the vehicle is pressing the brake pedal. Another example of filtering data may be filtering defect areas of sensor data, for example data of a camera or radar sensor. A further example of filtering data may be filtering known wrong patterns or situations in the data.

The interface 108 may further be configured to transform the data 132 of the first entity 102 and/or to transform the data 134 of the second entity 104. The interface 108 may then transmit the transformed data of the first entity 102 to the second entity 104 and to the third entity 106. Alternatively or additionally, the interface 108 may transmit the transformed data of the second entity 104 to the first entity 102 and to the third entity 106. Transforming may mean to manipulate, change, delete, or adjust the data from the first entity 102 and/or the data of the second entity 104.

It is to be understood, that the interface 108 may be configured to filter and to transform data 132 of the first entity 102 and/or data 134 of the second entity 104. For example, the interface 108, in particular the first channel 110 or the second channel 112, may filter data 132 from an egress of the first entity 102. After filtering the data, the interface 108, in particular the first channel 110 of the interface 108, may transform the filtered data, for example change the filtered data or at least one part of the filtered data. After transforming the filtered data, the interface 108 may transmit the filtered and transformed data of the first entity 102 to the second entity 104 and/or to the third entity 106.

In another example, the interface 108, in particular the first channel 110 or the second channel 112, may be configured to transform data 134 received from an egress of the second entity 104 and transmit the transformed data of the second entity 104 to the third entity 106 or to a non-blocking queue.

Further, the interface 108, in particular the first channel 110 or the second channel 112, may be configured to provide data from an egress of one entity of the assembly 100 to an ingress of at least one other entity of the assembly 100 or to a non-blocking queue.

The interface 108 may collect statistics of the data or events defined by data properties in the first channel 110 and/or the second channel 112 and send the statistics over a mobile communication channel to a fleet management system, for example, to determine a number of radar targets which suddenly jump between left and right at an edge of sensitivity. Further examples may be to determine the number of sudden brake events masked by later processing stages, or to determine the number of unclassified vehicles in a specific area.

The assembly 100 may further include a fourth entity 114. The fourth entity 114 may be configured to compare data 132 of the first entity 102, data 134 of the second entity 104, and/or data of the third entity 106 with each other. The further interface 118 may be configured to receive data from the third entity 106 and data from the interface 108 and transmit the data of the third entity 106 and the data of the interface 108 to the fourth entity 114. Another option would be to use machine learning to analyze patterns in the data received at the fourth entity 114, for example, intrusion detection or fault prediction.

Thus, the data transmitted from the interface 108 to the further interface 118 may be used either to trigger a shadow mode application, to perform a dedicated analysis or logging, or any other means.

The arrows shown in Fig. 1 may indicate a data flow of the respective data. The data flow may be carried out via a bus system in the vehicle or wireless, for example via Bluetooth or WLAN.

During development, the code (communication engine) may be configured in the default mode but may be extended during integration with a dedicated version. The configuration of the interface 108 may be changed via over the air software or configuration updates (OTA).

Fig. 2 shows a further assembly 100 for analyzing a system according to an embodiment. The first entity 102, the second entity 104, the third entity 106 and the interface 108 including the first channel 110 and the second channel 112 may be the same as described in Fig. 1. The interface 108 may receive data 132 of the first entity 102. In particular, the first channel 110 may receive the data 132 of the first entity 102. The interface 108 may further receive data 134 of the second entity 104. In particular, the second channel 112 may receive the data 134 of the second entity 104. The interface 108 may transmit the data 132 of the first entity 102 and the data 134 of the second entity 104 to the third entity 106. The interface 108 may be of a Web assembly Interface Type, WIT, or a Web assembly Interface Type definition file. The third entity 106 may receive the data 132 from the first entity 102 and the data 134 from the second entity 104. The third entity 106 may process the received data 132, 134 and generate output data 136. The output data 136 from an egress of the third entity 106 may be used to analyze the system or to test an application.

The data 132 of the first entity 102 and the data 134 of the second entity 104 may be filtered by means of the interface 108, or by means of the first channel 110 and the second channel 112, before the data 132 of the first entity 102 and the data 134 of the second entity 104 is transmitted to the third entity 106.

Alternatively or additionally, the data 132 of the first entity 102 and the data 134 of the second entity 104 may be transformed by means of the interface 108, or by means of the first channel 110 and the second channel 112, before the data 132 of the first entity 102 and the data 134 of the second entity 104 is transmitted to the third entity 106.

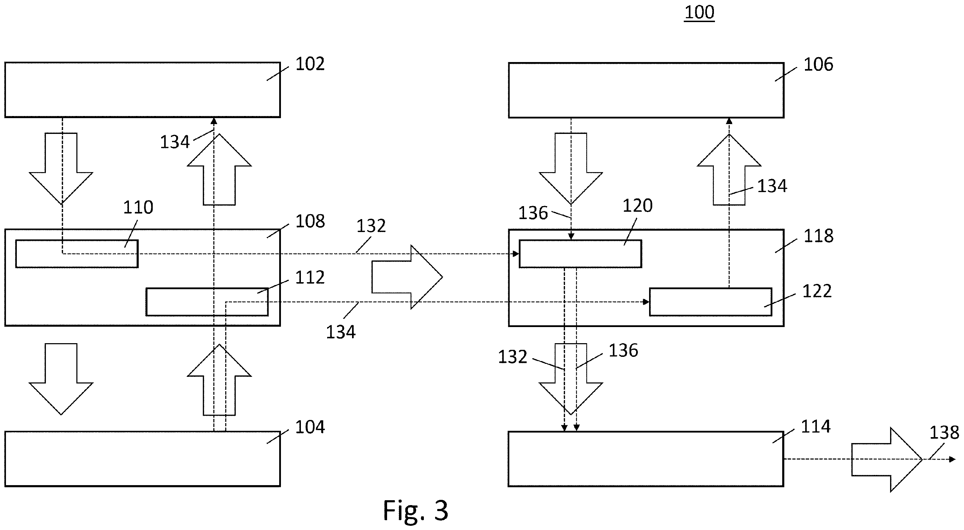

Fig. 3 shows a further assembly 100 for analyzing a system according to an embodiment. The first entity 102, the second entity 104, the third entity 106 and the interface 108 including the first channel 110 and the second channel 112 may be the same as described in Fig. 1 or Fig. 2. The assembly 100 may further include a further interface 118 and a fourth entity 114. The further interface 118 may include, similar to the interface 108, a third channel 120 and a fourth channel 122. The further interface 118, in particular the third channel 120 and/or the fourth channel 122, may be configured to receive the data 132, 134 from the interface 108. The further interface 118, in particular the third channel 120 and/or the fourth channel 122, may further be configured to transmit or to send the data 132, 134 from the interface 108 to the third entity 106. The further interface 118, in particular the third channel 120 and/or the fourth channel 122, may further be configured to receive data 136 from the third entity 106 and send the data 136 received from the third entity 106 to the fourth entity 114 of the assembly 100. The further interface 118, in particular the third channel 120 and/or the fourth channel 122, may be configured to filter and/or to transform the received data 132, 134 from the interface 108, in particular received data 132, 134 from the first channel 110 and/or from the second channel 112.

The fourth entity 114 may process the received data 136 of the third entity 106 and generate output data 138. The output data 138 from an egress of the fourth entity 114 may be used to analyze the system or to test an application.

As shown in Fig. 3, the interface 108 may receive data 134 of the second entity 104. In particular, the second channel 112 may receive the data 134 of the second entity 104. The interface 108 may transmit the data 134 of the second entity 104 to the first entity 102 and to the further interface 118, in particular to the fourth channel 122. The further interface 118, in particular the fourth channel 122, may transmit the data 134 of the second entity 104 to the third entity 106. Thus, the same data 134 of the second entity 104 or a copy of the data 134 may be received from the first entity 102 and the third entity 106. The third entity 106 may process the received data 134 from the second entity 104 and generate the output data 136. The output data 136 of the third entity 106 may be received by the further interface 118, in particular by the third channel 120. The further interface 118, in particular the third channel 120, may transmit the data 136 of the third entity 106 to the fourth entity 114.

Further, the interface 108 may receive the data 132 of the first entity 102. In particular, the first channel 110 may receive the data 132 of the first entity 102. The interface 108 may transmit the data 132 of the first entity 102 to the further interface 118. In particular, the first channel 110 may transmit the data 132 of the first entity102 to the third channel 120. The further interface 118, in particular the third channel 120 may transmit the received data 132 of the first entity 102 to the fourth entity 114.

The fourth entity 114 may be an analyzer, configured to analyze the received data and generate output data 138 of a result of the analysis. For example, the fourth entity 114 may compare the received data 136 of the third entity 106 to predefined data, or the fourth entity 114 may compare the received data 136 of the third entity 106 to the received data 132 of the first entity 102. The output data 138 from an egress of the fourth entity 114 may be used to analyze the system or to test an application.

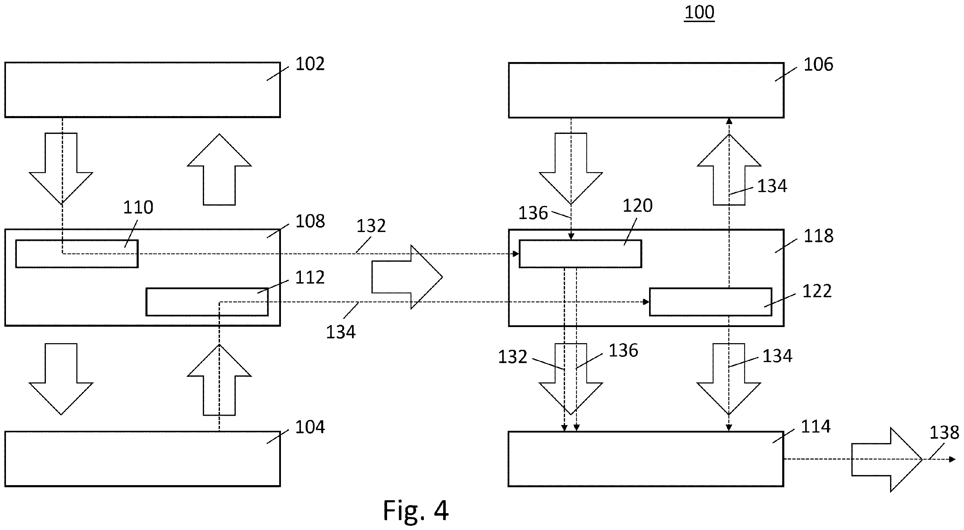

Fig. 4 shows a further assembly 100 for analyzing a system according to an embodiment. The first entity 102, the second entity 104, the third entity 106, the fourth entity 114, the interface 108 including the first channel 110 and the second channel 112 and the further interface 118 including the third channel 120 and the fourth channel 122 may be the same as described in Fig. 3. The interface 108 may receive data 134 of the second entity 104. In particular, the second channel 112 may receive the data 134 of the second entity 104. The interface 108 may also receive the data 132 of the first entity 102. In particular, the first channel 110 may receive the data 132 of the first entity 102. The interface 108 may transmit the data 134 of the second entity 104 to the further interface 118, in particular to the fourth channel 122. The interface 108 may transmit the data 132 of the first entity 102 to the further interface 118, in particular to the third channel 120. The further interface 118, in particular the third channel 120 may transmit the received data 132 of the first entity 102 to the fourth entity 114.

The further interface 118, in particular the fourth channel 122, may transmit the data 134 of the second entity 104 to the third entity 106 and to the fourth entity 114. Thus, the same data 134 of the second entity 104 or a copy of the data 134 may be received from the third entity 106 and the fourth entity 114. The third entity 106 may process the received data 134 and generate the output data 136. The output data 136 of the third entity 106 may be received by the further interface 118, in particular by the third channel 120. The further interface 118, in particular the third channel 120, may transmit the output data 136 of the third entity 106 to the fourth entity 114.

The fourth entity 114 may analyze the received data 136 from the third entity 106. For example, the fourth entity 114 may compare the received data 136 from the third entity 106 to the received data 134 from the second entity 104. The fourth entity 114 may also compare the received data 132 from the first entity 102 to the received data 134 from the second entity 104, or compare the received data 132 from the first entity 102 to the received data 136 from the third entity 106. Output data 138 of the fourth entity 114 including a result of the analysis of the fourth entity 114 may be used to analyze the system. This may lead to a more elaborate combination of recording mode and shadow mode of the assembly 100.

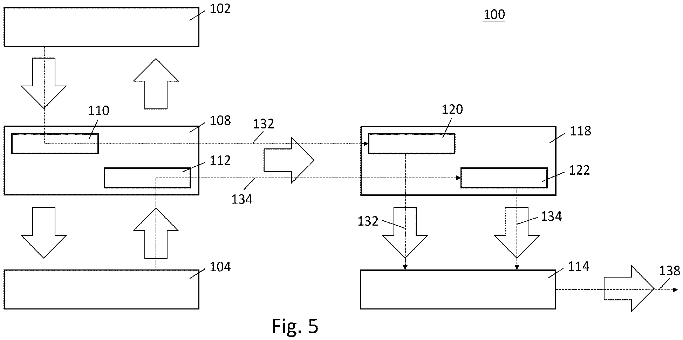

Fig. 5 shows a further assembly 100 for analyzing a system according to an embodiment. The assembly 100 of Fig. 5 may describe a live analysis or live monitoring of two entities 102, 104. The analysis may be carried out using artificial intelligence methods. The first entity 102 may be, for example, an application for autonomous driving or an application for advanced driver assistance systems in a vehicle. The second entity 104 may be, for example, a sensor that collects vehicle data. The fourth entity 114, the interface 108 including the first channel 110 and the second channel 112 and the further interface 118 including the third channel 120 and the fourth channel 122 may be the same as described in Fig. 3 or in Fig. 4. The interface 108 may receive the data 132 of the first entity 102. In particular, the first channel 110 may receive the data 132 of the first entity 102. The interface 108 may further receive the data 134 of the second entity 104. In particular, the second channel 112 may receive the data 134 of the second entity 104. The interface 108 may transmit the data 132 of the first entity 102 and the data 134 of the second entity 104 to the further interface 118. In particular, the first channel 110 may transmit the data 132 of the first entity 102 to the third channel 120 and the second channel 112 may transmit the data 134 of the second entity 104 to the fourth channel 122. The further interface 118, in particular the third channel 120 and the fourth channel 122 may transmit the received data 132 of the first entity 102 and the received data 134 of the second entity 104 to the fourth entity 114. The fourth entity 114 may analyze and/or monitor the received data 132 from the first entity 102 and the received data 134 from the second entity 104. Output data 138 of the fourth entity 114 including a result of the analysis of the fourth entity 114 may be used to analyze the system. Intrusion detection, fault detection, triggered event recording or the like may be typical use cases for this embodiment.

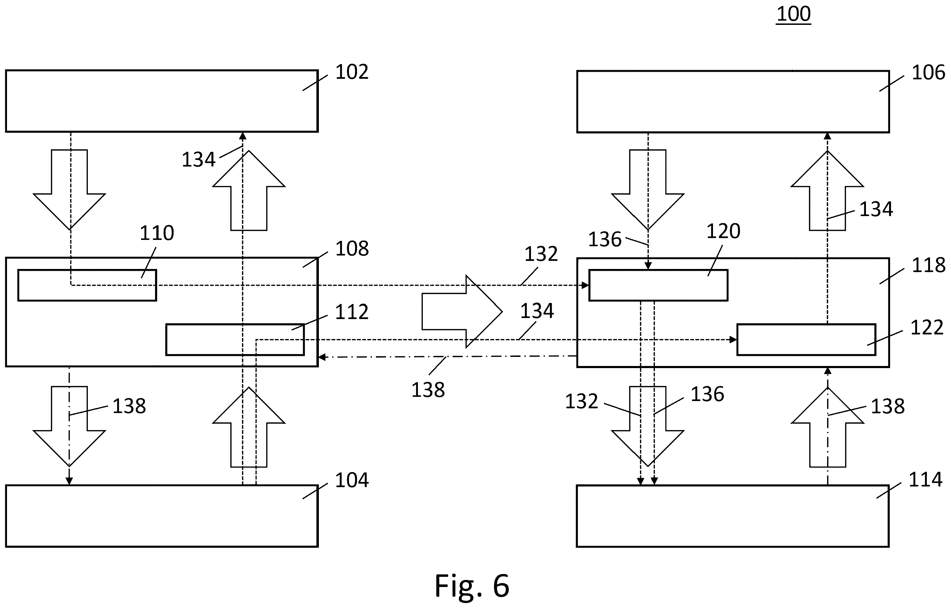

Fig. 6 shows a further assembly 100 for analyzing a system according to an embodiment. The first entity 102 and the third entity 106 may be software, for example, two fully independent lower quality algorithms. Alternatively, the first entity 102 and the third entity 106 may be sensors, for example, the first entity 102 may be a radar sensor and the third entity 106 may be a camera. Therefore, the data 132 of the first entity 102 may be radar data from the radar sensor and the data 136 of the third entity 106 may be image data from the camera. The second entity 104 may be hardware, for example, an interface to a vehicle or an emergency brake system of the vehicle.

The interface 108 including the first channel 110 and the second channel 112, and the further interface 118 including the third channel 120 and the fourth channel 122 may be the same as described in Figs. 3 to 5. However, in contrast to the embodiments described above, the interface 108 may also receive data from the further interface 118 and the further interface 118 may also transmit or send data to the interface 108 in this embodiment.

The fourth entity 114 may be software, for example, a high quality algorithm. The fourth entity 114 may process the received data 132 of the first entity 102 and the received data 136 of the third entity 106 and generate output data 138. In particular, the fourth entity 114 may compare the low quality data 132 of the first entity 102 and the low quality data 136 of the third entity 106 or test the data 132 with low quality of the first entity 102 and the data 136 with low quality of the third entity 106 for redundancy. Data with low quality in this context may mean that the data 132, 136 may be erroneous and therefore less reliable.

The output data 138 from an egress of the fourth entity 114 may be returned from the fourth entity 114 to the second entity 104 for further processing. The output data 138 may be of high quality, i.e. the output data 138 with high quality may be more reliable than the received data 132 with low quality of the first entity 102 and the received data 136 with low quality of the third entity 106. Thus, the output data 138 of the fourth entity 114 may be higher confidence data than the data 132 of the first entity 102 and the data 136 of the third entity 106.

As shown in Fig. 6, the interface 108 may receive low quality data 134 of the second entity 104. In particular, the second channel 112 may receive the data 134 of the second entity 104. The interface 108 may transmit the data 134 of the second entity 104 to the first entity 102 and to the further interface 118, in particular to the fourth channel 122. The further interface 118, in particular the fourth channel 122, may transmit the data 134 of the second entity 104 to the third entity 106. Thus, the same data 134 of the second entity 104 or a copy of the data 134 may be received from the first entity 102 and the third entity 106. The third entity 106 may process the received data 134 from the second entity 104 and generate the output data 136. The output data 136 of the third entity 106 may be received by the further interface 118, in particular by the third channel 120. The further interface 118, in particular the third channel 120, may transmit the data 136 of the third entity 106 to the fourth entity 114.

Further, the interface 108 may receive the data 132 of the first entity 102. In particular, the first channel 110 may receive the data 132 of the first entity 102. The interface 108 may transmit the data 132 of the first entity 102 to the further interface 118. In particular, the first channel 110 may transmit the data 132 of the first entity to the third channel 120. The further interface 118, in particular the third channel 120 may transmit the received data 132 of the first entity 102 to the fourth entity 114.

The fourth entity 114 may be an analyzer, configured to analyze the received data and generate output data 138 of a result of the analysis. For example, the fourth entity 114 may compare the received low quality data 136 of the third entity 106 to the received low quality data 132 of the first entity 102. The fourth entity 114 may test the received low quality data 136 of the third entity 106 to the received low quality data 132 of the first entity 102 for redundancy.

The high quality output data 138 of the fourth entity 114 may be returned to the second entity 104 by means of the interface 108 and the further interface 118. It is to be understood that the further interface 118, in particular the third channel 120 and/or the fourth channel 122 of the further interface 118, may be configured to receive the output data 138 of the fourth entity 114 and transmit the output data 138 of the fourth entity 114 to the interface 108. Further, the interface 108, in particular the first channel 110 and/or the second channel 112 of the interface 108, may be configured to receive the output data 138 from the further interface 118, in particular from the third channel 120 and/or the fourth channel 122 of the further interface 118, and transmit the output data 138 of the fourth entity 114 to the second entity 104.

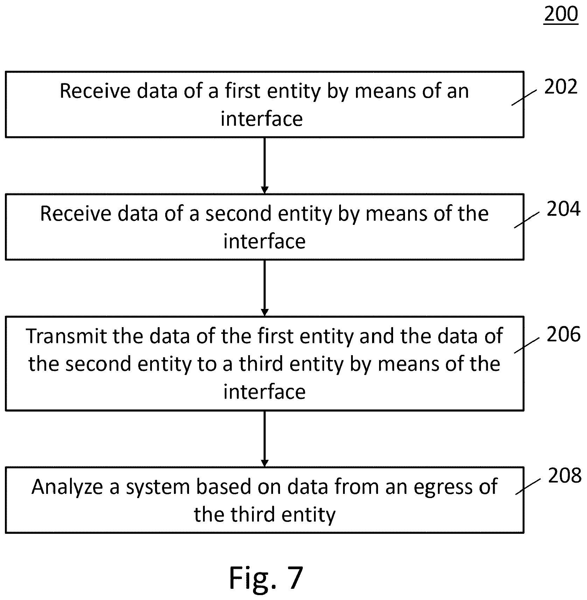

Fig. 7 shows a flow diagram 200 illustrating a method for analyzing a system according to various embodiments. At 202, data of a first entity may be received by means of an interface. At 204, data of a second entity may be received by means of the interface. At 206, the data of the first entity and the data of the second entity may be transmitted to a third entity by means of the interface. At 208, a system may be analyzed based on data from an egress of the third entity. The interface may be of a Web assembly Interface Type (WIT), or a Web assembly Interface Type definition file.

With introducing the interface the original purpose to provide data into a dedicated test environment can be achieved. In particular, adding additional filtering may improve security of the test environment. Further, manipulating data may allow fuzzing or other tests, and ADAS logging and replay may be possible by using a data recorder, for example in the fourth entity of the assembly

### Reference numeral list

- 100: assembly
- 102: first entity
- 104: second entity
- 106: third entity
- 108: interface
- 110: first channel
- 112: second channel
- 114: fourth entity
- 118: interface
- 120: third channel
- 122: fourth channel
- 132: data
- 134: data
- 136: data
- 138: data

- 200: flow diagram illustrating a method for analyzing a system according to various embodiments
- 202: step of receiving data of a first entity
- 204: step of receiving data of a second entity
- 206: step of transmitting the data of the first entity and the data of the second entity to a third entity
- 208: step of analyzing a system

## Claims

1. Assembly (100) for analyzing a system, the assembly (100) comprising
- a first entity (102), configured to send and receive data,
- a second entity (104), configured to send and receive data,
- at least one third entity (106), configured to receive the data from the first entity (102) and/or the data from the second entity (104), and
- an interface (108), configured to transmit the data of the first entity (102) to the second entity (104) and to the third entity (106) and/or to transmit the data of the second entity (104) to the first entity (102) and to the third entity (106),
wherein the interface (108) is defined by a Web assembly Interface Type, WIT, or a Web assembly Interface Type definition file, and wherein data from an egress of the third entity (106) is used for analyzing the system.

2. Assembly (100) according to claim 1,
wherein the interface (108) is configured to filter the data of the first entity (102) and/or to filter the data of the second entity (104).

3. Assembly (100) according to at least one of claims 1 or 2,
wherein the interface (108) is configured to transform the data of the first entity (102) and/or to transform the data of the second entity (104).

4. Assembly (100) according to at least one of claims 1 to 3,
wherein the interface (108) comprises a first channel (110) and a second channel (112), the first channel (110) and the second channel (112) being defined by a Web assembly Interface Type, WIT, or a Web assembly Interface Type definition file.

5. Assembly (100) according claim 4,
wherein the first channel (110) is configured to receive the data from the first entity (102) and transmits the data of the first entity (102) to the second entity (104), wherein the first channel (110) is further configured to transmit the data of the first entity (102) to the third entity (106), and/or. wherein the second channel (112) is configured to receive the data of the second entity (104) and transmits the data of the second entity (104) to the first entity (102), wherein the second channel (112) is further configured to transmit the data of the second entity (104) to the third entity (106).

6. Assembly (100) according to at least one of claims 1 to 5,
wherein the interface (108) is configured to be operable independently of an operation system of the assembly (100).

7. Assembly (100) according to at least one of claims 1 to 6,
wherein the first entity (102) and the second entity (104) are configured to communicate solely via the interface (108).

8. Assembly (100) according to at least one of claims 1 to 7, further comprising
- a further interface (118), wherein the further interface (118) is defined by a Web assembly Interface Type, WIT, or a Web assembly Interface Type definition file,
wherein the further interface (118) is configured to receive data from the interface (108) and transmit the data from the interface (108) to the third entity (106).

9. Assembly (100) according to claim 8, further comprising
- a fourth entity (114), configured to compare data of the first entity (102), data of the second entity (104), and/or data of the third entity (106),
wherein the further interface (118) is configured to receive data from the third entity (106) and data from the interface (108) and transmit the data of the third entity (106) and the data of the interface (108) to the fourth entity (114).

10. Method (200) for analyzing a system, comprising
- receiving (202) data of a first entity (102) by means of an interface (108),
- receiving (204) data of a second entity (104) by means of the interface (108),
- transmitting (206) the data of the first entity (102) and the data of the second entity (104) to a third entity (106) by means of the interface (108), and
- analyzing (208) the system based on data from an egress of the third entity (106),
wherein the interface (108) is defined by a Web assembly Interface Type, WIT, or a Web assembly Interface Type definition file.

11. Method (200) according to claim 10, further comprising
- filtering the data of the first entity (102) by means of the interface (108), and/or
- filtering the data of the second entity (104) by means of the interface (108)
before transmitting the data of the first entity (102) and the data of the second entity (104) to the third entity (106).

12. Method (200) according to at least one of claims 10 or 11, further comprising
- transforming the data of the first entity (102) by means of the interface (108), and/or
- transforming the data of the second entity (104) by means of the interface (108)
before transmitting the data of the first entity (102) and the data of the second entity (104) to the third entity (106).

13. Method (200) according to at least one of claims 10 to 12, further comprising
- receiving data from the interface (108) by means of a further interface (118), and
- transmitting the data from the interface (108) to the third entity (106) by means of the further interface (118).

14. Vehicle, comprising the assembly (100) of at least one of claims 1 to 9.

15. Non-transitory computer readable medium comprising instructions for carrying out the method of at least one of claims 10 to 13.
